# EUROPEAN PATENT APPLICATION

(11) **EP 1 882 673 A1**
(43) Date of publication of application: **30.01.2008**
(21) Application number: 06253953.1
(22) Date of filing: 28.07.2006
(51) Int. Cl.: C01B 13/11

(54) **Ozone generator**

(71) Applicant: Liou, Huei-Tarng, Taipei City 106 (TW)
(72) Inventor:
(74) Representative: Oxley, Rachel Louise

(57) **Abstract**

The present invention is related to an ozone generator (30) with advantages of high generating efficiency, small size, and good capabilities of heat dissipation and oxidization prevention. The ozone generator comprises a cooling plate (32), a high-voltage plate (34) disposed opposite to the cooling plate, and a channel structure (36) arranged between the cooling plate and the high-voltage plate. The channel structure comprises a first plate (361) having an inner surface and an outer surface attached to the cooling plate, a second plate (362) having an inner surface opposite to the inner surface of the first plate and an outer surface attached to the high-voltage plate, a plurality of lateral plates connecting the first plate to the second plate to define a space between the first plate and the second plate, a first opening (364) formed on one of the lateral plates for directing the air into the space, and a second (365) opening formed on one of the lateral plates for directing the air to flow out of the space. The structure of the ozone generator can be stacked up to form a stack module and further form a stack assembly of ozone generators having advantages of high ozone-generating rate, high volume flow rate and being small in size.

## Description

### Field of the Invention

The present invention is related to an ozone generator, in particular related to an ozone generator that is easy to stack up, and thus small in size.

### Background of the Invention

Ozone (O₃) is a sort of gas that is widely used in removing contaminants from the gas or the liquid to be cleaned. Due to its own unstable chemical properties under normal temperature and pressure, ozone is apt to combine with other contaminants to form compounds that are benign. Therefore, ozone has become popular as cleaning gas and has been adopted for use by household electric appliances such as washing machines, refrigerators, air conditioners and many kinds of air cleaners in recent years.

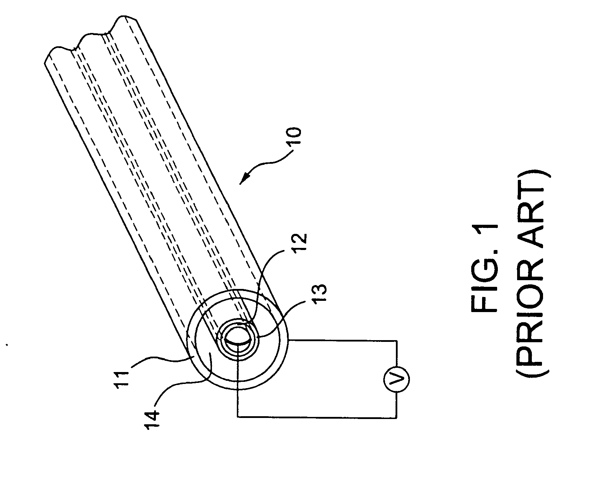

In the conventional method, an ozone tube is utilized to generate ozone. Figure 1 illustrates a conventional structure of an ozone tube 10. The ozone tube 10 comprises an outer-ring tubular electrode 11 encompassing an inner-ring tubular electrode 12. Both the outer-ring tubular electrode 11 and the inner-ring tubular electrode 12 are made of stainless steel. The outer surface of the inner-ring tubular electrode 12 is further attached to an inner surface of a hollow glass tube 13 used as a dielectric substance, and therefore a space 14 is formed between the outer-ting tubular electrode 11 and the glass tube 13 to be filled with air. By applying high voltage to the two electrodes, corona discharge will be generated in the space 14 and leads to ionization of the gas therein, and further results in the formation of the ozone. However, the conventional ozone tube contains defects described as follows. First, the direct contact between the air and the outer-ring tubular electrode 11 and the huge amount of heat generated due to corona discharge under high-voltage may cause excessive heating of the electrodes, lead to oxidation of the inner surface of the outer-ring tubular electrode 11, and therefore reduce the efficiency of the ozone tube. Moreover, the high frequency of the current applied to the two electrodes may also cause the fracturing of the glass tube 13 and the ozone tube 10 will fail to work accordingly.

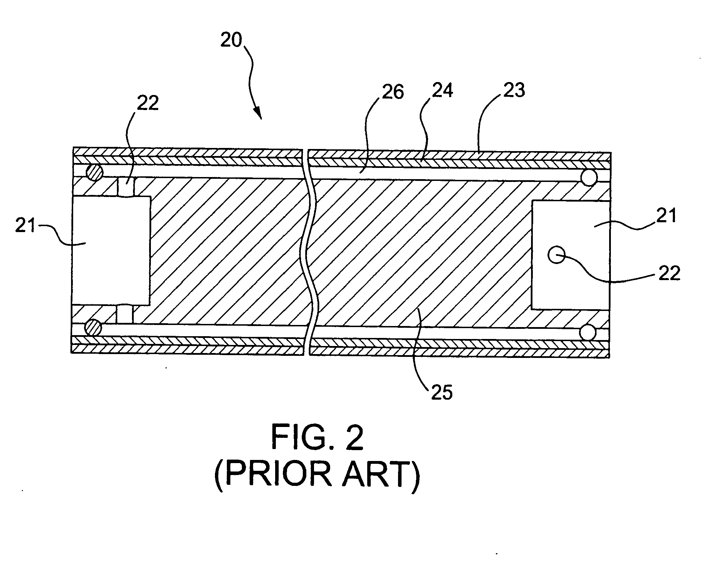

Taiwan Utility Model Pat. No. M270172 Patent discloses an improved structure of an ozone tube. Figure 2 illustrates the cross-sectional view of the ozone tube 20. As shown in Figure 2, guiding spaces 21 for leading the air in and leading the air out are arranged on each of the two ends of the ozone tube 20. Guiding apertures 22 are configured to lead the air into the discharge space 26 at one end and direct the air to flow out of the discharge space 26 at the other end. The ozone tube 20 further comprises an outer-ring electrode 23 encompassing a center electrode 25. By applying high voltage to the above two electrodes, corona discharge is generated in the discharge space 26 to ionize the air so that the ozone is formed. It should be noticed that in order to prevent the electrode from being oxidized under high voltage for long periods, the inner surface of the outer-ring electrode 23 is coated with an antioxidant layer 24.

In view of the above, ozone tubes as described have the following defects:
I. An ozone tube occupies a large volume since it presents an elongated appearance and the air is limited to flow through the tube along its axial direction. If volume flow rate of the ozone is to be raised, the only way to achieve this goal is to combine several ozone tubes as a tube assembly. However, tube assembly will enlarge the overall size of the ozone generator and raise the manufacturing cost thereof.
II. Huge amounts of heat accompany the high voltage applied to the ozone tube. It is obvious that the temperature of each element will be raised because of the heat , resulting in negative effects on the elements. In the worst case, the elements may fail to work anymore.

Accordingly, it is necessary to develop an ozone generator with the advantages of high ozone-generating efficiency and small size. In addition, good capabilities of heat dissipation and oxidization prevention are also required.

### Summary of the Invention

The object of the present invention is to provide an ozone generator with advantages of small size and high ozone-generating rate.

The other object of the present invention is to provide an ozone generator with excellent capability of heat dissipation so as to efficiently dissipate the huge amount of heat generated by corona discharge.

Another object of the present invention is to provide an ozone generator that is able to prevent the electrodes thereof from becoming oxidized under high voltage for long periods of operation so as to extend the lifespan of the ozone generator.

To achieve the above objects, the present invention that discloses an ozone generator adapted to direct the air therein to generate ozone. The ozone generator comprises a cooling plate, a high-voltage plate disposed opposite to the cooling plate, and a channel structure arranged between the cooling plate and the high-voltage plate. The channel structure comprises a first plate having an inner surface and a outer surface attached to the cooling plate, a second plate having an inner surface opposite to the inner surface of the first plate attached to the high-voltage plate, a plurality of lateral plates connecting the first plate to the second plate to define a space, a first opening formed on one of the lateral plates and communicating with the space for directing the air into the space, and a second opening formed on one of the lateral plates and communicating with the space for directing the air to flow out of the space.

According to one preferred embodiment of the present invention, the high-voltage plate is electrically connected to a power supply and a transformer, and the cooling plate is grounded. The high-voltage plate and the cooling plate can be hollow plates made of aluminum and each of them comprises two openings for the inflow and the outflow of the cooling agent. The high-voltage plate and the cooling plate can be further connected to a circulated cooling system to achieve better cooling efficiency. The channel structure can further comprise a plurality of separators extended from the lateral plates and arranged to divide the space into a fluid passage. The separators may be cylinders or rectangular pillars of which the diameter or the thickness is equal to the gap distance between the first plate and the second plate, and is preferred to be about 0.5mm to gain better performance of corona discharge effect. It is preferred that quartz be used as the material for manufacturing the channel structure, and each part of the channel structure can be weld sealed. Moreover, the outer surface of the second plate can be coated with a metal layer, such as gold (Au), so as to enhance the electric conductivity between the second plate and the high-voltage plate.

According to another preferred embodiment of the present invention, the structure of the ozone generator can be stacked up. Several ozone generators according to the first embodiment of the present invention can be stacked up to form a stack assembly. Two ozone generators can be combined into an ozone generator module by using a common high-voltage plate. The module comprises two opposite channel structures, two cooling plates, and a high-voltage plate. The two cooling plates sandwich the two channel structures therebetween with each cooling plate respectively contacting with the first plate of one of the channel structures. The high-voltage plate is sandwiched between the second plates of the channel structures. Besides, two or more ozone generator modules can be stacked to further form a stack assembly of ozone generators in which one of the cooling plates of one ozone generator module is a cooling plate of the other ozone generator module. Based on the stacking method as described above, a stack assembly of ozone generators having the advantages of high ozone-generating rate, high volume flow rate and being small in size is therefore formed.

The characteristics of the invention will become apparent to those skilled in the art by making reference to the drawings of the invention and the following detailed descriptions of the preferred embodiments.

### Brief Description of the Drawings

Figure 1 illustrates a conventional structure of an ozone tube;
Figure 2 illustrates a cross-sectional view of another conventional ozone tube;
Figure 3 illustrates a cross-sectional view of the structure of an ozone generator according to first preferred embodiment of the present invention;
Figure 4 illustrates a cross-sectional view of the channel structure when viewing from the top; and
Figure 5 illustrates another preferred embodiment according to the present invention.

### Detailed Description of the Preferred Embodiments

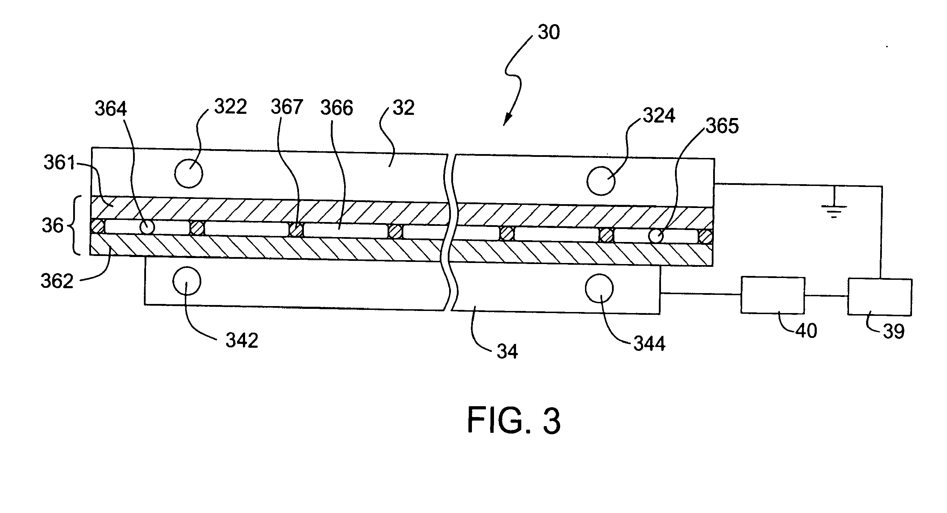

Figure 3 illustrates a cross-sectional view of the structure of an ozone generator according to first preferred embodiment of the present invention. As shown in Figure 3, an ozone generator 30 comprises a cooling plate 32, a high-voltage plate 34 and a channel structure 36. The cooling plate 32 is disposed opposite to the high-voltage plate 34 and the channel structure 36 is arranged between the two plates 32 and 34. The high-voltage plate 34 is further electrically connected to a power supply 39 and a transformer 40, and the cooling plate 32 may be grounded. In addition, the cooling plate 32 can be a hollow plate comprising a hollow portion to be filled with cooling agent, and openings 322 and 324 communicating with the hollow portion to provide the inflow and the outflow of the cooling agent. Similarly, the high-voltage plate 34 can be a hollow plate comprising a hollow portion to be filled with cooling agent, and openings 342 and 344 communicating with the hollow portion to provide the inflow and the outflow of the cooling agent. The cooling plate 32 and the high-voltage plate 34 are preferred to be hollow plates made of aluminum and may be further connected with a circulated cooling system so as to provide good capabilities of electric conductivity and heat dissipation together with low manufacturing cost.

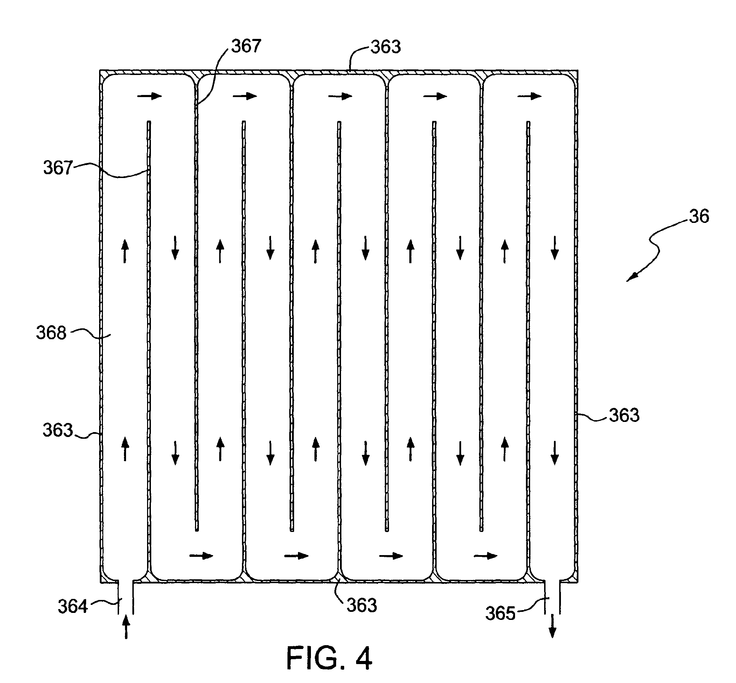

Figure 4 illustrates a cross-sectional view of the channel structure 36 when viewing from the top. As shown in Figures 3 and 4, the channel structure 36 comprises a first plate 361, a second plate 362, a plurality of lateral plates 363, and two openings 364 and 365. The first plate 361 has an inner surface and an outer surface attached to one side of the cooling plate 32. The second plate 362 also has an inner surface opposite to the inner surface of the first plate 361, and an outer surface attached to one side of the high-voltage plate 34. Lateral plates 363 are configured to connect the first plate 361 and the second plate 362 so as to define a space 366 therebetween. The openings 364 and 365 are formed on at least one of the lateral plates 363 and communicate with the space 366 as the inlet and the outlet of space 366, respectively. As shown in Figure 4, the channel structure 36 can further comprise a plurality of separators 367 extended from the lateral plates 363 and spaced so as to further divide the space 366 into a fluid passage 368. Therefore, the air entering the fluid passage 368 inside the channel structure 36 via the opening 364 is confined to flow along the passage 368, and then leaves the channel structure 36 via the opening 365. It should be noticed that the profile of the separators 367 may be cylinders or rectangular pillars, which are in contact with the inner surfaces of the first plate 361 and the second plate 362. In other words, the diameter or the thickness of the separators 367 is equal to the gap distance between the first plate 361 and the second plate 362. In addition, the gap distance is preferred to be about 0.5mm so as to have a better performance of corona discharge effect.

The outer surfaces of the first plate 361 and the second plate 362 of the channel structure 36 are in contact with the inner surface of the cooling plate 32 and the inner surface of the high-voltage plate 34, respectively. Further, channel structure 36 should be made of material that can be used as a dielectric substance having the property of anti-oxidation. According to the present invention, it is preferred that quartz be used as the material for manufacturing the channel structure 36 and each part of the channel structure 36 can be weld sealed. Moreover, the outer surface of the second plate 362 can be coated with a metal layer, such as gold (Au), so as to have better electric conductivity between the second plate 362 and the high-voltage plate 34.

The operation principle of the ozone generator according to the present invention is explained as follows. The cooling plate 32 and the high-voltage plate 34 serve as two electrodes of the ozone generator 30. While the electric current is provided by the power supply 39, a high frequency of electric current in a range of about 7000Hz to about 17000Hz is generated and fed into the high voltage transformer 40. The high voltage transformer 40 raises the voltage of the electric current to a range of about 6000 volts to about 30000 volts to apply on the high-voltage plate 34. Since the cooling plate 32 is grounded, a high electric potential difference accordingly exists between the high-voltage 34 and the cooling plate 32. As it may be expected, corona discharge takes place in the gas flowing through the fluid passage 368 of the channel structure 36 because of such a high electric potential difference. The gas or air in the fluid passage 368 coming from the opening 364 will be ionized due to corona discharge and then ozone is generated. The air-flow containing ozone therein then flows out of the channel structure 36 through the opening 365 and therefore the ozone generator 30 achieves the function of generating ozone.

While the ozone generator 30 is being operated, cooling agent is fed into the hollow portions of the cooling plate 32 and the high-voltage plate 34 via openings 322 and 342, respectively. Afterward, the cooling agent flows out of the cooling plate 32 and the high-voltage plate 34 via openings 324 and 344 respectively so that the heat generated due to the high voltage is removed and the ozone generator is therefore cooled. In addition, the channel structure 36 made of quartz can effectively prevent the formation of metallic oxidation contamination and therefore extend the lifespan of the ozone generator. Also, the quartziferous channel structure 36 is capable of sustaining the electric current with high frequency and high voltage such that it may avoid cracking.

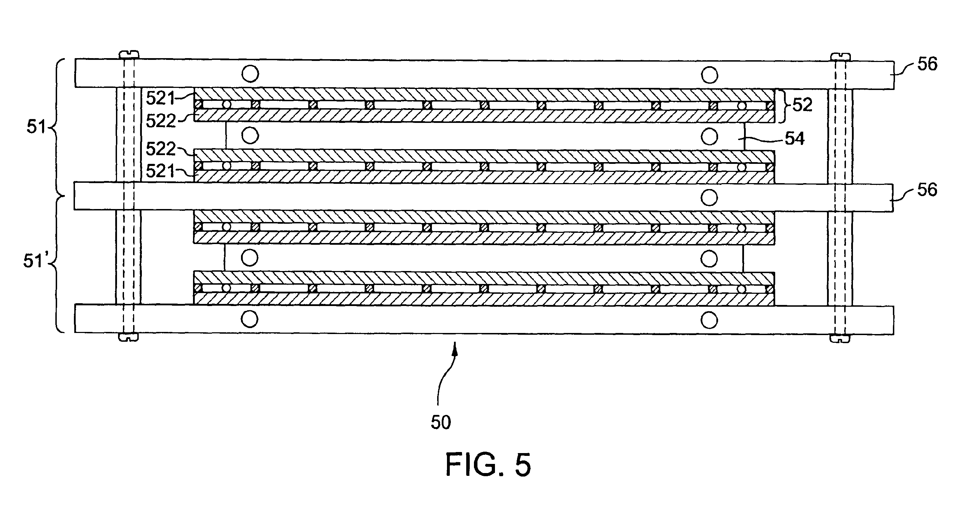

Several ozone generators according to the first embodiment of the present invention can be stacked up to form a stack assembly 50. Figure 5 illustrates another preferred embodiment according to the present invention. As shown in Figure 5, in the current embodiment, two ozone generators can be combined into a module 51 by using a common high-voltage plate 54. As shown, each ozone generator module 51 comprises a pairs of opposite channel structures 52, a high-voltage plate 54, as well as two cooling plates 56. The structure of each channel structure 52 is the same as that disclosed in the first embodiment of the present invention and contains a first plate 521 and a second plate 522 (the power supply and the transformer are omitted in Figure 5). Two cooling plates 56 sandwich the two channel structures 52 therebetween. The first plate 521 of each channel structure 52 contacts with the respective cooling plate 56 and the second plate 522 of each channel structure 52 sandwiches the high-voltage plate 54 therebetween so as to construct an ozone generator module 51. Based on the above structure, an ozone generator module 51 can be combined with another ozone generator module 51' by using a common cooling plate 56, as shown in Figure 5 and form a stack assembly 50. In this way, the stack assembly of ozone generator has the advantages of high generating rate, high volume flow rate, and being small in size.

In summary, the ozone generator according to the present invention provides the following advantages:
I. The structure can easily be stacked up. Therefore, the overall size of the ozone generator is reduced and the ozone-generating rate and the volume flow rate are raised.
II. Since ozone is generated between the first plate and the second plate of the channel structure made of quartz, the defects of oxidation of electrodes and the formation of metallic oxidation contamination no longer exist. Fracture of the quartziferous channel structure under high voltage and high frequency will not occur. Accordingly, the lifespan of the ozone generator is extended.
III. The design of the cooling structure of the high-voltage plate and the cooling plate can efficiently remove the heat from the high-voltage plate, the cooling plate and the quartziferous channel structure so that the temperatures thereof are lowered and therefore the failure of the components in the ozone generator will not occur.

The invention may also be implemented in other specific modes without departing from the spirit and the essence of the invention. Thus, the above-mentioned embodiments shall be regarded as explanatory but not restrictive. All changes consistent with the meaning and range of the claims and the equivalents shall fall within the scope claimed by the invention.

## Claims

1. An ozone generator, comprising:
a cooling plate;
a high-voltage plate, disposed opposite to the cooling plate; and
a channel structure, arranged between the cooling plate and the high-voltage plate, comprising:
a first plate having an inner surface and an outer surface attached to the cooling plate;
a second plate having an inner surface opposite to the inner surface of the first plate, and an outer surface attached to the high-voltage plate;
a plurality of lateral plates, connecting the first plate to the second plate to define a space between the first plate and the second plate;
a first opening, formed on one of the lateral plates and communicating with the space for directing the air into the space; and
a second opening, formed on one of the lateral plates and communicating with the space for directing the air to flow out of the space.

2. The ozone generator of Claim 1, wherein the cooling plate is grounded.

3. The ozone generator of Claim 1, further comprising a power supply, and a transformer electrically connected to the power supply, as well as to the high-voltage plate.

4. The ozone generator of Claim 3, wherein the power supply provides an electric current with a high frequency in a range of about 7000Hz to about 17000Hz to feed into the transformer.

5. The ozone generator of Claim 4, wherein the transformer raises the voltage of the electric current to a range of about 6000 volts to about 30000 volts.

6. The ozone generator of Claim 1, wherein the channel structure further comprises a plurality of separators spaced apart between the lateral plates and being in contact with the first plate and the second plate so as to divide the space into a fluid passage for confining the air to flow from the first opening to the second opening.

7. The ozone generator of Claim 6, wherein the thickness of the separators is about 0.5mm.

8. The ozone generator of Claim 6, wherein the profile of the separators is a cylinder.

9. The ozone generator of Claim 6, wherein the first plate and the second plate are made of quartz.

10. The ozone generator of Claim 6, wherein the lateral plates are made of quartz.

11. The ozone generator of Claim 10, wherein the separators are made of quartz.

12. The ozone generator of Claim 1, wherein the outer surface of the second plate is coated with a metal layer.

13. The ozone generator of Claim 12, wherein the metal layer is gold (Au).

14. The ozone generator of Claim 1, wherein the high-voltage plate comprises a hollow portion to be filled with a cooling agent used for cooling down the high-voltage plate.

15. The ozone generator of Claim 1, wherein the cooling plate comprises a hollow portion to be filled with a cooling agent used for cooling down the cooling plate.

16. The ozone generator of Claim 14, wherein the high-voltage plate is made of aluminum.

17. The ozone generator of Claim 15, wherein the cooling plate is made of aluminum.

18. The ozone generator of Claim 14, wherein the high-voltage plate comprises a third opening and a fourth opening communicating with the hollow portion thereof, the third opening directing the cooling agent into the hollow portion, and the forth opening directing the cooling agent to flow out of the hollow portion.

19. The ozone generator of Claim 15, wherein the cooling plate comprise a fifth opening and a sixth opening communicating with the hollow portion thereof, the fifth opening directing the cooling agent into the hollow portion, and the sixth opening directing the cooling agent to flow out of the hollow portion.

20. An ozone generator module, comprising:
two opposite channel structures, each channel structure comprising:
a first plate;
a second plate opposite to the first plate;
a plurality of lateral plates connecting the first plate to the second plate to define a space between the first plate and the second plate;
a first opening, formed on one of the lateral plates; and
a second opening, formed on one of the lateral plates;
two cooling plates sandwiching the two channel structures therebetween, with each cooling plate respectively contacting with the first plate of one of the channel structures; and
a high-voltage plate, sandwiched between the second plates of the channel structures.

21. A stack assembly of ozone generators, comprising:
two or more ozone generator modules according to Claim 20, wherein one of the cooling plates of one ozone generator module is a cooling plate of the other ozone generator module.
